# EUROPEAN PATENT SPECIFICATION

(11) **EP 4 554 261 B1**
(45) Date of publication and mention of the grant of the patent: **18.11.2026**
(21) Application number: 24736299.9
(22) Date of filing: 24.06.2024
(51) Int. Cl.: H04W 4/80, H04W 4/06, H04W 76/14, H04M 1/72412, G06F 3/16, H04R 3/12, H04L 67/1095, H04M 1/72409

(54) **ELECTRONIC DEVICE, METHOD, AND NON-TRANSITORY COMPUTER-READABLE STORAGE MEDIUM FOR BROADCASTING IN WIRELESS ENVIRONMENT**
ELEKTRONISCHE VORRICHTUNG, VERFAHREN UND NICHTTRANSITORISCHES COMPUTERLESBARES SPEICHERMEDIUM ZUR RUNDSENDUNG IN EINER DRAHTLOSEN UMGEBUNG
DISPOSITIF ÉLECTRONIQUE, PROCÉDÉ ET SUPPORT DE STOCKAGE NON TRANSITOIRE LISIBLE PAR ORDINATEUR POUR LA DIFFUSION DANS UN ENVIRONNEMENT SANS FIL

(30) Priority: 27.09.2023 KR 20230131260; 20.11.2023 KR 20230160601
(43) Date of publication of application: 14.05.2025
(73) Proprietor: Samsung Electronics Co., Ltd., Suwon-si, Gyeonggi-do 16677 (KR)
(72) Inventor: RYU, Kyusang, Suwon-si, Gyeonggi-do 16677 (KR); YOO, Hyungseoung, Suwon-si, Gyeonggi-do 16677 (KR); CHEONG, Gupil, Suwon-si, Gyeonggi-do 16677 (KR)
(74) Representative: HGF
(86) International application number: PCT/KR2024/008667
(87) International publication number: WO 2025/070942

(56) References cited:
- WO-A1-2022/265433
- WO-A1-2023/027407
- CN-A- 114 979 972
- CN-A- 116 647 830
- CN-A- 116 647 830
- KR-A- 20230 047 644
- US-A1- 2022 070 247
- HUNN NICK: "Introducing Bluetooth LE Audio", BLUETOOTH GUIDE, January 2022 (2022-01-01), pages 1 - 315, XP093118698, Retrieved from the Internet <URL:https://www.bluetooth.com/wp-content/uploads/2022/01/Introducing-Bluetooth-LE-Audio-book.pdf> [retrieved on 20240112]

## Description

### [Technical Field]

The following descriptions relate to an electronic device, a method, and a non-transitory computer-readable storage medium for broadcast in a wireless environment.

### [Background Art]

Compared to legacy Bluetooth^{®} (or classic Bluetooth), Bluetooth^{®} low energy (BLE) may provide reduced power consumption and a wide communication range between connected devices. BLE may be provided on an industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

PCT/KR2022/012221 discloses a method for managing audio quality in a low energy audio broadcast scenario.

### [Disclosure]

### [Technical Solution]

The invention is set out in the independent claims. Preferred embodiments are set out in the dependent claims.

An electronic device is provided. The electronic device may comprise memory configured to store instructions. The electronic device may comprise communication circuitry for Bluetooth low energy (BLE). The electronic device may comprise a processor. The processor may be configured to execute the instructions to cause the electronic device to detect, while providing a first audio service by broadcasting a packet N (N is a natural number greater than 1) times within a broadcast isochronous stream (BIS) event using the communication circuitry, an event for a second audio service provided by transmitting a packet through a communication link between the electronic device and an external electronic device to the external electronic device using the communication circuitry. The processor may be configured to execute the instructions to cause the electronic device to broadcast, while providing the second audio service using the communication circuitry based on the detection, a packet M (M is a natural number that is greater than or equal to 1 and is less than N) times within a BIS event using the communication circuitry.

An electronic device is provided. The electronic device may comprise memory configured to store instructions. The electronic device may comprise communication circuitry for Bluetooth low energy (BLE). The electronic device may comprise a processor. The processor may be configured to execute the instructions to cause the electronic device to detect, while providing a first audio service through a broadcast isochronous stream (BIS) using the communication circuitry, an event for a second audio service provided by transmitting a packet through a communication link between the electronic device and an external electronic device to the external electronic device using the communication circuitry. The processor may be configured to execute the instructions to cause the electronic device to, while providing the second audio service using the communication circuitry based on the detection, cease broadcasting a packet through a portion of a BIS event for the first audio service overlapping time resources for the second audio service, and broadcast a packet through another portion of the BIS event for the first audio service not overlapping the time resources for the second audio service.

An electronic device is provided. The electronic device may comprise memory configured to store instructions. The electronic device may comprise communication circuitry for Bluetooth low energy (BLE). The electronic device may comprise a processor. The processor may be configured to execute the instructions to cause the electronic device to detect, while providing a first audio service through a broadcast isochronous stream (BIS) using the communication circuitry, an event for a second audio service provided by transmitting a packet through a communication link between the electronic device and an external electronic device to the external electronic device using the communication circuitry. The processor may be configured to execute the instructions to cause the electronic device to change, in response to the detection, the number of times a packet is broadcasted in a BIS event for the first audio service using the communication circuitry, from N times (N a natural number greater than 1) to M times (M is a natural number that is greater than or equal to 1 and is less than N).

A method is provided. The method may be executed in an electronic device with communication circuitry for Bluetooth low energy (BLE). The method may comprise detecting, while providing a first audio service by broadcasting a packet N (N is a natural number greater than 1) times within a broadcast isochronous stream (BIS) event using the communication circuitry, an event for a second audio service provided by transmitting a packet through a communication link between the electronic device and an external electronic device to the external electronic device using the communication circuitry. The method may comprise broadcasting, while providing the second audio service using the communication circuitry based on the detection, a packet M (M is a natural number that is greater than or equal to 1 and is less than N) times within a BIS event using the communication circuitry.

A method is provided. The method may be executed in an electronic device with communication circuitry for Bluetooth low energy (BLE). The method may comprise detecting, while providing a first audio service through a broadcast isochronous stream (BIS) using the communication circuitry, an event for a second audio service provided by transmitting a packet through a communication link between the electronic device and an external electronic device to the external electronic device using the communication circuitry. The method may comprise, while providing the second audio service using the communication circuitry based on the detection, ceasing broadcasting a packet through a portion of a BIS event for the first audio service overlapping time resources for the second audio service, and broadcasting a packet through another portion of the BIS event for the first audio service not overlapping the time resources for the second audio service.

A method is provided. The method may be executed in an electronic device with communication circuitry for Bluetooth low energy (BLE). The method may comprise detecting, while providing a first audio service through a broadcast isochronous stream (BIS) using the communication circuitry, an event for a second audio service provided by transmitting a packet through a communication link between the electronic device and an external electronic device to the external electronic device using the communication circuitry. The method may comprise changing, in response to the detection, the number of times a packet is broadcasted in a BIS event for the first audio service using the communication circuitry, from N times (N a natural number greater than 1) to M times (M is a natural number that is greater than or equal to 1 and is less than N).

A non-transitory computer readable storage medium is provided. The non-transitory computer readable storage medium may store one or more program. The one or more programs may comprise instructions which, when executed by an electronic device with communication circuitry for Bluetooth low energy (BLE), cause the electronic device to detect, while providing a first audio service by broadcasting a packet N (N is a natural number greater than 1) times within a broadcast isochronous stream (BIS) event using the communication circuitry, an event for a second audio service provided by transmitting a packet through a communication link between the electronic device and an external electronic device to the external electronic device using the communication circuitry. The one or more programs may comprise instructions which, when executed by the electronic device, cause the electronic device to broadcast, while providing the second audio service using the communication circuitry based on the detection, a packet M (M is a natural number that is greater than or equal to 1 and is less than N) times within a BIS event using the communication circuitry.

A non-transitory computer readable storage medium is provided. The non-transitory computer readable storage medium may store one or more program. The one or more programs may comprise instructions which, when executed by an electronic device with communication circuitry for Bluetooth low energy (BLE), cause the electronic device to detect, while providing a first audio service through a broadcast isochronous stream (BIS) using the communication circuitry, an event for a second audio service provided by transmitting a packet through a communication link between the electronic device and an external electronic device to the external electronic device using the communication circuitry. The one or more programs may comprise instructions which, when executed by the electronic device, cause the electronic device to, while providing the second audio service using the communication circuitry based on the detection, cease broadcasting a packet through a portion of a BIS event for the first audio service overlapping time resources for the second audio service, and broadcast a packet through another portion of the BIS event for the first audio service not overlapping the time resources for the second audio service.

A non-transitory computer readable storage medium is provided. The non-transitory computer readable storage medium may store one or more program. The one or more programs may comprise instructions which, when executed by an electronic device with communication circuitry for Bluetooth low energy (BLE), cause the electronic device to detect, while providing a first audio service through a broadcast isochronous stream (BIS) using the communication circuitry, an event for a second audio service provided by transmitting a packet through a communication link between the electronic device and an external electronic device to the external electronic device using the communication circuitry. The one or more programs may comprise instructions which, when executed by the electronic device, cause the electronic device to, change, in response to the detection, the number of times a packet is broadcasted in a BIS event for the first audio service using the communication circuitry, from N times (N a natural number greater than 1) to M times (M is a natural number that is greater than or equal to 1 and is less than N).

### [Description of the Drawings]

FIG. 1 illustrates an example of a wireless environment including an electronic device, a first external electronic device, and a second external electronic device.
FIG. 2 is a simplified block diagram of an exemplary electronic device.
FIG. 3 is a simplified block diagram of a first external electronic device.
FIG. 4 is a flowchart illustrating a method executed in an electronic device to change a communication method for a first audio service based on detection of an event for a second audio service.
FIG. 5 is a flowchart illustrating a method executed in an electronic device to change the number of times a packet is broadcasted in a broadcast isochronous stream (BIS) event for a first audio service based on detection of an event for a second audio service.
FIG. 6 illustrates an example of changing the number of times a packet is broadcasted in a BIS event for a first audio service based on detection of an event for a second audio service.
FIG. 7 is a flowchart illustrating a method executed in an electronic device to adjust transmit power of a packet broadcasted through a BIS event for a first audio service while providing a second audio service based on detection of an event for the second audio service.
FIGS. 8 and 9 illustrate an example of adjusting transmit power of a packet broadcasted through a BIS event for a first audio service while providing a second audio service based on detection of an event for the second audio service.
FIG. 10 is a flowchart illustrating a method executed in an electronic device to adjust size of a packet broadcasted through a BIS event for a first audio service while providing a second audio service based on detection of an event for the second audio service.
FIG. 11 is a flowchart illustrating a method executed in an electronic device to determine whether a second audio service may be provided together with a first audio service.
FIG. 12 is a flowchart illustrating a method executed in a first external electronic device to process a packet broadcasted through a BIS event for a first audio service from an electronic device while providing a second audio service.
FIG. 13 is a flowchart illustrating a method executed in an electronic device to restore a broadcasting method for a first audio service according to terminating providing a second audio service.
FIG. 14 is a block diagram of an electronic device in a network environment according to various embodiments.

### [Mode for Invention]

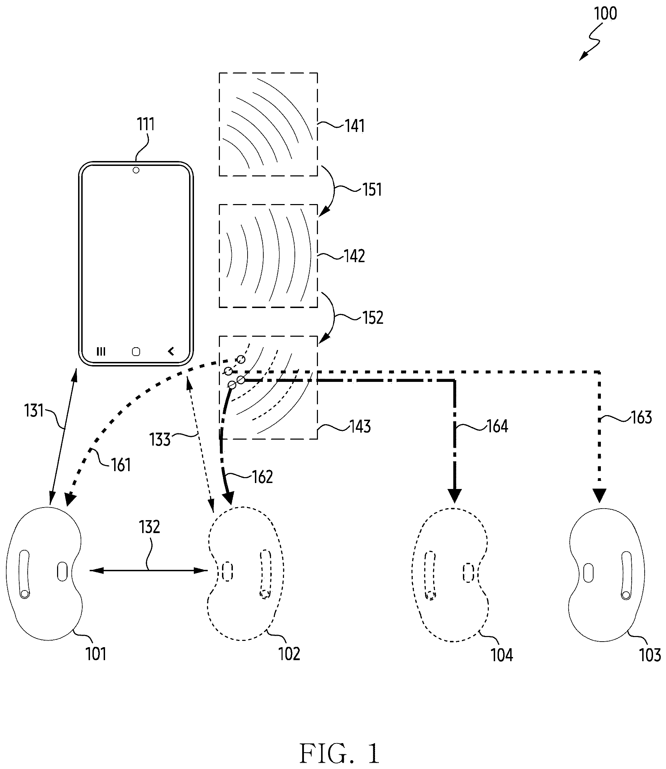

FIG. 1 illustrates an example of a wireless environment including an electronic device, a first external electronic device, and a second external electronic device.

Referring to FIG. 1, a wireless environment 100 may include an electronic device 111, a first external electronic device 101, and a second external electronic device 102. As a non-limiting example, the wireless environment 100 may further include a third external electronic device 103 and a fourth external electronic device 104.

The electronic device 111 in the wireless environment 100 may provide an audio service in conjunction with the first external electronic device 101 (and/or the second external electronic device 102). For example, the electronic device 111 may be an audio source device.

The electronic device 111 may provide a first audio service in conjunction with the first external electronic device 101 (and/or the second external electronic device 102). The first audio service may be provided through a broadcast isochronous stream (BIS). For example, the electronic device 111 may broadcast a packet for outputting audio, in order for the first audio service (e.g., to perform, or to provide, the first audio service). For example, the packet may be broadcasted through (or within) a broadcast isochronous group (BIG) event (or a BIS event included in the BIG event). For example, the BIG event may include one or more BIS events. For example, the one or more BIS events may include (comprise) a BIS event for the first external electronic device 101 and a BIS event for the second external electronic device 102. For example, each of the one or more BIS events may include one or more sub-events (e.g., each BIS event may include, or comprise, one or more sub-events).

For example, the electronic device 111 may provide a second audio service in conjunction with the first external electronic device 101 (and/or the second external electronic device 102). Unlike the first audio service, the second audio service may be provided through a communication link.

For example, unlike the first audio service, the second audio service may be provided through a communication link 131 between the electronic device 111 and the first external electronic device 101. For example, the communication link 131 may include an asynchronous connectionless link (ACL), which is a control data link. As a non-limiting example, the communication link 131 may be used for a connected isochronous stream (CIS). As a non-limiting example, the communication link 131 may include a synchronous connection-oriented (SCO) link. As a non-limiting example, the communication link 131 may include an enhanced SCO (eSCO) link. For example, the communication link 131 may include the ACL, the CIS link, the SCO link, and/or the eSCO link.

For example, unlike the first audio service, the second audio service may be provided through a communication link 133 between the electronic device 111 and the second external electronic device 102. For example, the communication link 133 may include the ACL. As a non-limiting example, the communication link 133 may be used for the CIS. As a non-limiting example, the communication link 133 may include the SCO link. As a non-limiting example, the communication link 133 may include the eSCO link.

The first external electronic device 101 in the wireless environment 100 may provide an audio service in conjunction with the electronic device 111 (and/or the second external electronic device 102). For example, the first external electronic device 101 may be an audio sink device.

For example, the first external electronic device 101 may be configured to output audio. For example, the first external electronic device 101 may be configured to output audio, based on a packet broadcasted from the electronic device 111 for the first audio service. For example, the first external electronic device 101 may be configured to output audio, based on a packet received from the electronic device 111 through the communication link 131 for the second audio service.

For example, the first external electronic device 101 may be configured to obtain audio. For example, the first external electronic device 101 may obtain audio, based on a request received from the electronic device 111 through the communication link 131. For example, the first external electronic device 101 may transmit data on the obtained audio to the electronic device 111 through the communication link 131.

The second external electronic device 102 in the wireless environment 100 may provide an audio service in conjunction with the electronic device 111 and the first external electronic device 101. For example, the second external electronic device 102 may be an audio sink device.

For example, the second external electronic device 102 may be configured to output audio. For example, the second external electronic device 102 may be configured to output audio based on a packet broadcasted from the electronic device 111 for the first audio service. For example, the second external electronic device 102 may be configured to output audio based on a packet received from the electronic device 111 through the communication link 133 for the second audio service.

For example, the second external electronic device 102 may be configured to obtain audio. For example, the second external electronic device 102 may obtain audio based on a request received from the electronic device 111 through the communication link 133. For example, the second external electronic device 102 may transmit data on the obtained audio to the electronic device 111 through the communication link 133.

For example, the second external electronic device 102 may be a device paired with (or connected to) the first external electronic device 101. As a non-limiting example, the first external electronic device 101 may be worn on a user's right ear and the second external electronic device 102 may be worn on a user's left ear. That is, in an example, the first external electronic device 101 and second external electronic device 102 may be right and left (wireless) earphones. As a non-limiting example, the first external electronic device 101 paired with the second external electronic device 102 may indicate that the first external electronic device 101 and the second external electronic device 102 are configured as a set to provide an audio service. As a non-limiting example, the first external electronic device 101 paired with the second external electronic device 102 may indicate that the first external electronic device 101 and the second external electronic device 102 are connected through the communication link 132. As a non-limiting example, the first external electronic device 101 paired with the second external electronic device 102 may indicate that the first external electronic device 101 and the second external electronic device 102 are used for a stereophonic sound. For example, audio outputted through a speaker of the first external electronic device 101 may correspond to audio outputted through a speaker of the second external electronic device 102 (e.g., right and left audio streams). For example, audio obtained through a microphone of the first external electronic device 101 may correspond to audio obtained through a microphone of the second external electronic device 102.

For example, the electronic device 111 may broadcast a packet for the BIS, in order for the first audio service.

For example, the electronic device 111 may execute one or more advertisements 141, in order to provide information for access to the packet for the BIS, which is broadcasted for the first audio service. For example, the one or more advertisements 141 may provide information for access to a periodic advertisement 142, as indicated by arrow 151. For example, the one or more advertisements 141 may include advertising a first packet (e.g., ADV_EXT_IND packet) on each of primary advertising channels (e.g., Ch. 37, Ch. 38, and Ch. 39). For example, the first packet may indicate that additional information (or data, or packet) is provided through another (or additional) advertisement (e.g., extended advertisement). For example, the first packet may indicate a second packet (e.g., AUX_ADV_IND packet) (or extended advertisement packet). For example, the one or more advertisements 141 may be advertised on at least a portion of secondary advertising channels, and may include advertising the second packet indicating a periodic advertisement 142.

For example, the electronic device 111 may execute the periodic advertisement 142 to provide information for access to the packet for the BIS, which is broadcasted for the first audio service. For example, as indicated by arrow 152, the periodic advertisement 142 may provide information for access to the packet for the BIS broadcasted for the first audio service from electronic device 111. For example, as indicated by arrow 152, the periodic advertisement 142 may indicate resources for broadcasting the packet 143 for the BIS. For example, the periodic advertisement 142 may include advertising a third packet. For example, the third packet may include information on an interval of the periodic advertisement 142, information on offset of transmission according to the periodic advertisement 142, information on channel map of the periodic advertisement 142, information on ACL, information on an initial value of cyclic redundancy check (CRC), information on a counter (e.g., PeriodicEventCounter) of an event in the periodic advertisement 142, and information (or advertisement data) on a BIG (e.g., including multiple instances for the BIS from the electronic device 111) scheduled (or generated, or obtained) by the electronic device 111.

For example, since the electronic device 111 is a connection assistance device with respect to the first external electronic device 101 and the second external electronic device 102, the electronic device 111 may transmit information (e.g., logical link (LL)_PERIODIC_SYNC_IND) on the periodic advertisement 142 to the first external electronic device 101 through the communication link 131, in order to assist synchronization to the BIS for the first audio service. For example, the information on the periodic advertisement 142 may indicate a section of the periodic advertisement 142, a hopping sequence of the periodic advertisement 142, and/or an access address for synchronization to the BIS from the electronic device 111. As a non-limiting example, the electronic device 111 may transmit the information on the periodic advertisement 142 to the second external electronic device 102 through the communication link 133. As a non-limiting example, the information on the periodic advertisement 142 may be transmitted to the first external electronic device 101 among the first external electronic device 101 and the second external electronic device 102, and the information on the periodic advertisement 142 transmitted to the first external electronic device 101 may be transmitted from the first external electronic device 101 to the second external electronic device 102 through the communication link 132.

For example, as indicated by arrow 161, the first external electronic device 101 may synchronize to the BIS for the first audio service, by using the information on the periodic advertisement 142 received from the electronic device 111. Synchronization by the first external electronic device 101 to the BIS may indicate that the first external electronic device 101 receives at least a portion of packets broadcasted from the electronic device 111 for the first audio service. Synchronization by the first external electronic device 101 to the BIS may indicate that the first external electronic device 101 receives at least a portion of packets broadcasted through a BIS event for the first external electronic device 101, included in a BIG event for the first audio service. For example, synchronization by the first external electronic device 101 to the BIS may indicate that the first external electronic device 101 receives a packet broadcasted through the BIS from the electronic device 111 for the first audio service one or more times within six ISO intervals (or six consecutive ISO intervals).

For example, the first external electronic device 101 may receive the packet broadcasted from the electronic device 111 for the first audio service, and provide the first audio service by outputting audio using the packet (e.g., based on the received packet).

For example, as indicated by arrow 162, the second external electronic device 102 may synchronize to the BIS for the first audio service, by using the information on the periodic advertisement 142 received from the electronic device 111. Synchronization by the second external electronic device 102 to the BIS may indicate that the second external electronic device 102 receives at least a portion of packets broadcasted from the electronic device 111 for the first audio service. Synchronization by the second external electronic device 102 to the BIS may indicate that the second external electronic device 102 receives at least a portion of packets broadcasted through a BIS event for the second external electronic device 102, included in a BIG event for the first audio service. For example, synchronization by the second external electronic device 102 to the BIS may indicate that the second external electronic device 102 receives a packet broadcasted through the BIS from the electronic device 111 for the first audio service one or more times, within six ISO intervals.

For example, the second external electronic device 102 may receive the packet broadcasted from the electronic device 111 for the first audio service, and provide the first audio service by outputting audio using the received packet (e.g., based on the received packet).

For example, the first audio service may be further provided through a third external electronic device 103 and a fourth external electronic device 104. For example, the packet broadcasted from the electronic device 111 for the first audio service may be received by the third external electronic device 103 and the fourth external electronic device 104. For example, a connection assistance device (not illustrated in FIG. 1) of the third external electronic device 103 and the fourth external electronic device 104 may obtain information (e.g., LL_PERIODIC_SYNC_IND) on the periodic advertisement 142 executed by the electronic device 111 through one or more advertisements 141 executed by the electronic device 111. For example, the connection assistance device of the third external electronic device 103 and the fourth external electronic device 104 may transmit the obtained information to the third external electronic device 103 through a communication link with the third external electronic device 103. For example, the connection assistance device of the third external electronic device 103 and the fourth external electronic device 104 may transmit the obtained information to the fourth external electronic device 104 through a communication link with the fourth external electronic device 104.

For example, as indicated by arrow 163, the third external electronic device 103 may synchronize to the BIS for the first audio service, by using the information on the periodic advertisement 142 received from the connection assistance device of the third external electronic device 103 and the fourth external electronic device 104. Synchronization by the third external electronic device 103 to the BIS may indicate that the third external electronic device 103 receives at least a portion of packets broadcasted from the electronic device 111 for the first audio service. Synchronization by the third external electronic device 103 to the BIS may indicate that the first external electronic device 103 receives at least a portion of packets broadcasted through a BIS event for the third external electronic device 103, included in a BIG event for the first audio service. For example, synchronizing by the third external electronic device 103 to the BIS may indicate that the third external electronic device 103 receives a packet broadcasted through the BIS from the electronic device 111 for the first audio service one or more times, within six ISO intervals.

For example, the third external electronic device 103 may receive the packet broadcasted from the electronic device 111 for the first audio service, and provide the first audio service by outputting audio using the received packet.

For example, as indicated by arrow 164, the fourth external electronic device 104 may synchronize to the BIS for the first audio service, by using the information on the periodic advertisement 142 received from the connection assistance device of the third external electronic device 103 and the fourth external electronic device 104. Synchronization by the fourth external electronic device 104 to the BIS may indicate that the fourth external electronic device 104 receives at least a portion of packets broadcasted from the electronic device 111 for the first audio service. Synchronization by the fourth external electronic device 104 to the BIS may indicate that the fourth external electronic device 104 receives at least a portion of packets broadcasted through a BIS event for the fourth external electronic device 104, included in a BIG event for the first audio service. For example, synchronizing by the fourth external electronic device 104 to the BIS may indicate that the fourth external electronic device 104 receives a packet broadcasted through the BIS from the electronic device 111 for the first audio service one or more times, within six ISO intervals.

For example, the fourth external electronic device 104 may receive the packet broadcasted from the electronic device 111 for the first audio service, and provide the first audio service by outputting audio using the received packet.

For example, the electronic device 111 may transmit a packet through a communication link for the second audio service.

For example, the electronic device 111 may transmit a packet to the first external electronic device 101 through the communication link 131. For example, the packet may be used to output audio according to the second audio service. For example, the first external electronic device 101 may provide the second audio service by outputting audio using the packet. For example, the packet may be used to obtain audio according to the second audio service through the first external electronic device 101. For example, the first external electronic device 101 may provide the second audio service by transmitting another packet including information on audio obtained in response to the packet to the electronic device 111 through the communication link 131.

For example, the electronic device 111 may transmit a packet to the second external electronic device 102 through the communication link 133. For example, the packet may be used to output audio according to the second audio service. For example, the second external electronic device 102 may provide the second audio service by outputting audio using the packet. For example, the packet may be used to obtain audio according to the second audio service through the second external electronic device 102. For example, the second external electronic device 102 may provide the second audio service by transmitting another packet including information on audio obtained in response to the packet to the electronic device 111 through the communication link 133.

For example, while the first audio service is provided, an event for the second audio service may occur. As a non-limiting example, the event may be occurring an incoming call or detecting (or identifying, or receiving) a user input indicating acceptance of the incoming call within the electronic device 111.

As a non-limiting example, providing the second audio service while providing the first audio service may reduce a quality of the second audio service. For example, while providing the second audio service, maintaining a state of the first audio service to a state of the first audio service before starting the second audio service may reduce a quality of the second audio service. For example, the electronic device 111 may change a state of the first audio service for the quality of the second audio service.

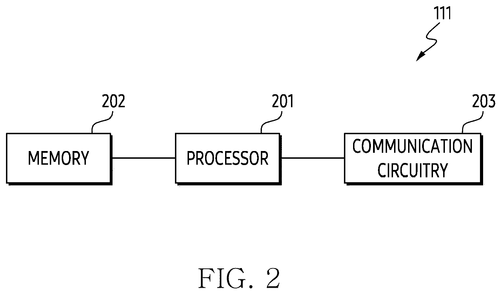

Meanwhile, as a non-limiting example, the first audio service may be resumed after the second audio service is terminated. In order to reduce a time consumed to resume the first audio service after termination of the second audio service, the electronic device 111 may not (completely) terminate the first audio service in response to the event. As a non-limiting example, in response to the event, the electronic device 111 may reduce time resources used for the first audio service, instead of (completely) terminating the first audio service for a quality of the second audio service. That is, the first audio service may be maintained, but using fewer (time) resources, during provision (whilst providing) of the second audio service. For example, the amount of time resources used for the first audio service while the second audio service is provided may be less than the amount of time resources used for the first audio service before a start of the second audio service. As a non-limiting example, in response to the event, the electronic device 111 may allocate only time resources for maintaining synchronization to the BIS, in order for the first audio service. For example, the electronic device may allocate only resources required for maintaining synchronization to the BIS for the first audio service (e.g., for synchronization but without audio output of the first audio service). Components of the electronic device 111 for reducing time resources consumed for the first audio service while the second audio service is provided are illustrated in the description of FIG. 2.

FIG. 2 is a simplified block diagram of an exemplary electronic device.

Referring to FIG. 2, an electronic device 111 may include a processor 201, a memory 202, and communication circuitry 203.

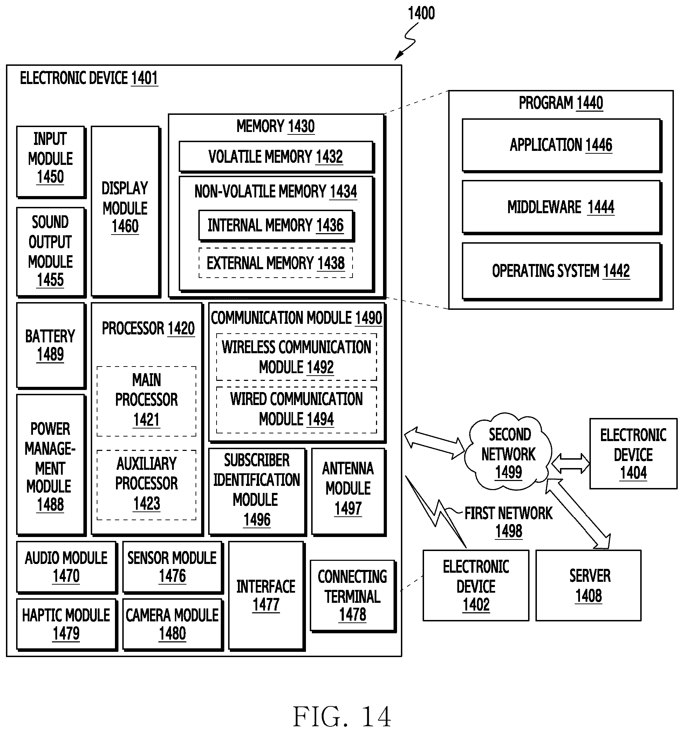

The processor 201 may include at least a portion of a processor 1420 of FIG. 14 or may correspond to at least a portion of a processor 1420 of FIG. 14. The processor 201 may be configured to control the communication circuitry 203. The processor 201 may be configured to execute instructions stored in the memory 202 to cause the electronic device 111 to perform at least a portion of the operations illustrated in the description of FIG. 1. For example, the processor 201 may control the communication circuitry 203 by executing the instructions stored in the memory 202.

The memory 202 may be configured to store the instructions. For example, the instructions may be included in one or more programs. For example, the memory 202 may include a nonvolatile memory. For example, the memory 202 may include at least a portion (e.g., a nonvolatile memory 1434) of a memory 1430 of FIG. 14 or may correspond to at least a portion of the memory 1430 of FIG. 14.

The communication circuitry 203 may support legacy Bluetooth and/or Bluetooth low energy (BLE). For example, the communication circuitry 203 may be used for communication with an external electronic device (e.g., the first external electronic device 101 and/or the second external electronic device 102). For example, the communication circuitry 203 may be used for the first audio service. For example, the communication circuitry 203 may be used for the second audio service.

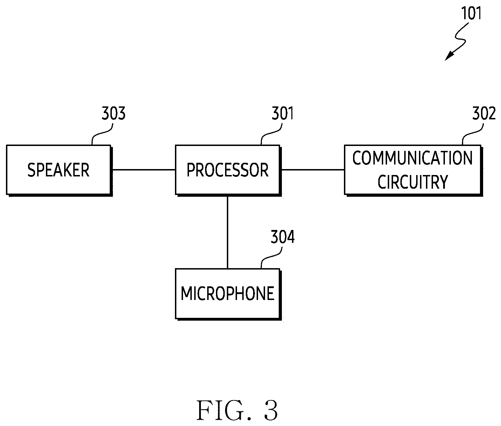

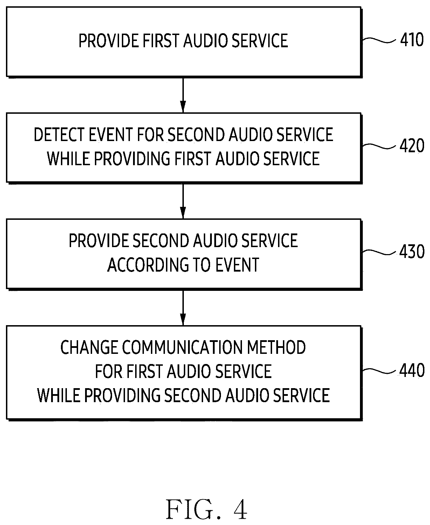

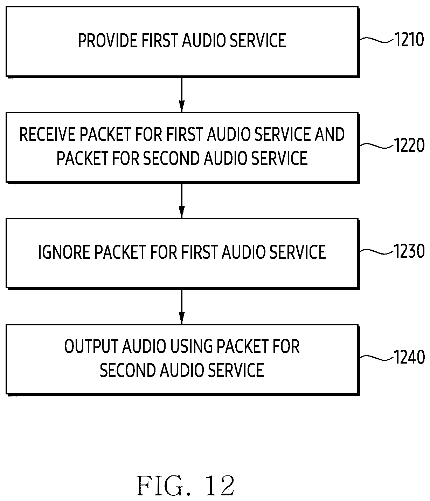

The electronic device 111 illustrated in the description of FIG. 2 may execute at least a portion of operations illustrated in descriptions of FIGS. 4 to 11 and 13. For example, the operations illustrated in the descriptions of FIGS. 4 to 11, and 13 may be caused by (or within) the electronic device 111, according to the control of the processor 201. For example, the first external electronic device 101 may include components for executing at least a portion of operations related to the operations caused by the electronic device 111 and operations illustrated in the description of FIG. 12. The components are illustrated in a description of FIG. 3.

FIG. 3 is a simplified block diagram of a first external electronic device.

Referring to FIG. 3, a first external electronic device 101 may include at least a portion of an electronic device 1402 of FIG. 14 or may correspond to at least a portion of the electronic device 1402 of FIG. 14. The first external electronic device 101 may include a processor 301, communication circuitry 302, and a speaker 303. The first external electronic device 101 may further include a microphone 304.

The processor 301 may be configured to control the communication circuitry 302, the speaker 303, and the microphone 304. The processor 301 may be configured to execute instructions stored in a memory (not illustrated in FIG. 3) to cause the first external electronic device 101 to perform at least a portion of the operations illustrated in the description of FIG. 1. The processor 301 may be configured to execute instructions stored in the memory to cause the first external electronic device 101 to perform operations for the first audio service. The processor 301 may be configured to execute instructions stored in the memory to cause the first external electronic device 101 to perform operations for the second audio service. For example, the memory may include a nonvolatile memory.

The communication circuitry 302 may support legacy Bluetooth and/or Bluetooth low energy (BLE). For example, the communication circuitry 302 may be used for communication with the electronic device 111. For example, the communication circuitry 302 may be used for the first audio service. For example, the communication circuitry 302 may be used for the second audio service.

The speaker 303 may be configured to output audio. For example, the speaker 303 may output audio provided from the electronic device 111. For example, the speaker 303 may be used for the first audio service. For example, the speaker 303 may be used for the second audio service.

The microphone 304 may be configured to obtain audio caused around the first external electronic device 101. For example, the microphone 304 may be used to obtain audio to be provided to the electronic device 111. For example, the microphone 304 may be used for the second audio service.

FIG. 4 is a flowchart illustrating a method executed in an electronic device to change a communication method for a first audio service based on detection of an event for a second audio service.

Referring to FIG. 4, in operation 410, the processor 201 of the electronic device 111 may provide the first audio service through a BIS, as illustrated in the above descriptions (e.g., in the one or more examples set out above, referring to FIGs 1 through 3). For example, the processor 201 may cause the electronic device 111 to perform one or more advertisements 141. For example, the processor 201 may cause the electronic device 111 to perform a periodic advertisement 142. For example, the processor 201 may cause the electronic device 111 to perform broadcasting 143 a packet for the first audio service. For example, the packet broadcasted in operation 410 for the first audio service may include audio data obtained from a software application used (or executed) to provide the first audio service. As a non-limiting example, the packet broadcasted in operation 410 for the first audio service may be partially different from a packet broadcasted (or broadcast) from the electronic device 111 for the first audio service while providing the second audio service. For example, the packet broadcasted in operation 410 for the first audio service before providing the second audio service may be partially different from the packet broadcasted in operation 440 for the first audio service while providing the second audio service. For example, the packet broadcasted in operation 410 for the first audio service before providing the second audio service may include the audio data obtained from the software application, unlike the packet broadcasted in operation 440 for the first audio service while providing the second audio service (e.g., the packet broadcast in operation 440 for the first audio service while providing the second audio service, may not comprise the audio data). As a non-limiting example, while the packet broadcasted (broadcast) in operation 410 may include the audio data, the packet broadcast in operation 440 may not include the audio data.

For example, a processor 301 of a first external electronic device 101 may receive the packet broadcasted from the electronic device 111 in operation 410, and provide the first audio service by outputting audio using the received packet (e.g., to at least one external device). For example, a second external electronic device 102 may receive the packet broadcasted from the electronic device 111 in operation 410, and provide the first audio service by outputting audio using the received packet. For example, a third external electronic device 103 may receive the packet broadcasted from the electronic device 111 in operation 410, and provide the first audio service by outputting audio using the received packet. For example, a fourth external electronic device 104 may receive the packet broadcasted from the electronic device 111 in operation 410, and provide the first audio service by outputting audio using the received packet.

In operation 420, the processor 201 may detect, identify, check, or receive an event for the second audio service while providing the first audio service. For example, the processor 201 may detect the event by detecting a user input indicating to accept an incoming call to the electronic device 111. For example, the processor 201 may detect the event by receiving an incoming call to the electronic device 111 from another electronic device. The processor 201 may detect the event by detecting a user input indicating music playback. However, it is not limited thereto.

In operation 430, the processor 201 may provide the second audio service according to (e.g., based on) the event (e.g., the detected event). For example, when a communication link 131 between the electronic device 111 and the first external electronic device 101 is established for the second audio service before detecting the event, the processor 201 may provide the second audio service by transmitting a packet for the second audio service to the first external electronic device 101 through the communication link 131. For example, when the communication link 131 between the electronic device 111 and the first external electronic device 101 is not established for the second audio service before detecting the event, the processor 201 may provide the second audio service, by establishing the communication link 131 with the first external electronic device 101 in response to the event and transmitting a packet to the first external electronic device 101 through the communication link 131 established in response to the event.

For example, the packet transmitted to the first external electronic device 101 in operation 430 may include audio data. For example, the processor 301 of the first external electronic device 101 may provide the second audio service, by receiving the packet transmitted from the electronic device 111 in operation 430 and outputting audio using the received packet. For example, the processor 301 may output audio by rendering the audio data within the packet.

In operation 440, the processor 201 may change a communication method for the first audio service while providing the second audio service (e.g., for the duration of providing the second audio service, for example, when transmitting packet(s) for the second audio service through the communication link). For example, the processor may change a communication method for the first audio service for the duration of (e.g., whilst) providing the second audio service.. As illustrated in the description of FIG. 1, since maintaining a communication method for the first audio service to a communication method for the first audio service before providing the second audio service while providing the second audio service may reduce a quality of the second audio service, the processor 201 may change the communication method for the first audio service while providing (e.g., whilst, or during, providing) the second audio service.

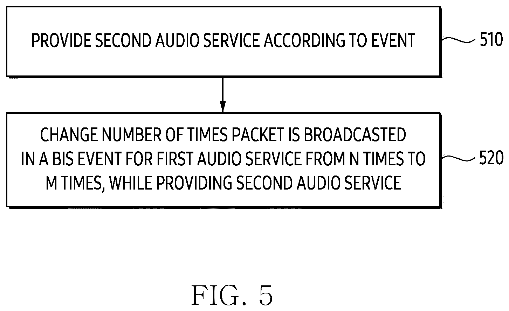

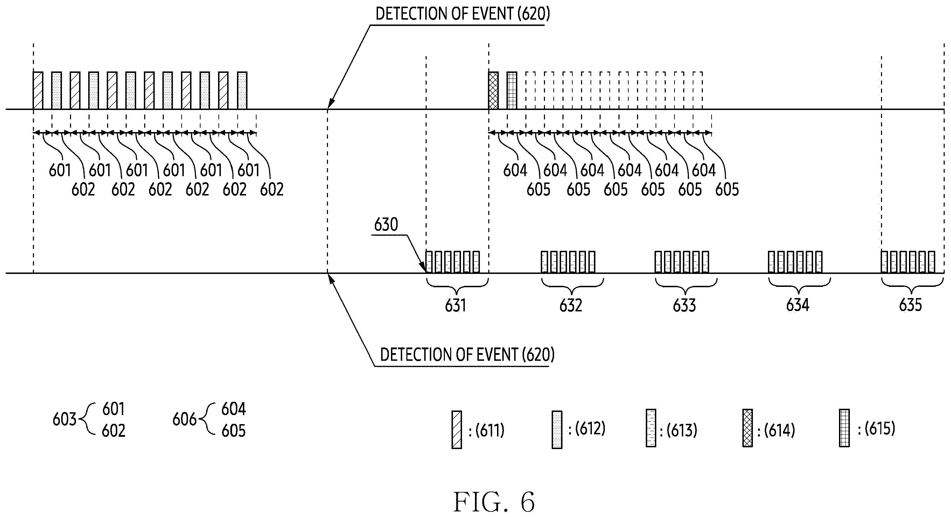

For example, the changed communication method may be implemented in various ways. For example, in order to secure resources for transmitting a packet for the second audio service through the communication link 131, the processor 201 may reduce resources consumed for the first audio service. For example, according to the changed communication method, the processor 201 may reduce the number of times a packet is broadcasted in a BIS event (e.g., a BIS event for the first external electronic device 101) (or a BIG event) for the first audio service while providing the second audio service. This operation is illustrated in description of FIGS. 5 and 6.

FIG. 5 is a flowchart illustrating a method executed in an electronic device to change the number of times a packet is broadcasted in a broadcast isochronous stream (BIS) event for a first audio service based on detection of an event for a second audio service.

FIG. 6 illustrates an example of changing the number of times a packet is broadcasted in a BIS event for a first audio service based on detection of an event for a second audio service.

Referring to FIG. 5, in operation 510, the processor 201 of the electronic device 111 may provide the second audio service according to the event. For example, operation 510 may correspond to operation 430 of FIG. 4.

In operation 520, the processor 201 may change the number of times a packet is broadcasted in a BIS event for the first audio service from N times (N is a natural number greater than 1) to M times (M is a natural number that is greater than or equal to 1 and less than N) while providing the second audio service. For example, the processor 201 may change a communication method for the first audio service while providing the second audio service, by reducing the number of times a packet is broadcasted in a BIS event for the first audio service. For example, the change may be applied to a plurality of BIS events (or all BIS events) scheduled (or generated, or obtained) for the first audio service while providing the second audio service. For example, the number of times a packet is broadcasted in each of the plurality of BIS events may be M times. For another example, the number of times a packet is broadcasted in each of the plurality of BIS events may be different according to priority of each of the plurality of BIS events. For example, when priority of a first BIS event among the plurality of BIS events is higher than priority of a second BIS event among the plurality of BIS events, the number of times a packet is broadcasted in the first BIS event may be M times, and the number of times a packet is broadcasted in the second BIS event may be O times (O is a natural number that is greater than or equal to 1 and less than M).

For example, referring to FIG. 6, a BIG event (e.g., a BIG event 603) for the first audio service may include two BIS events (e.g., a first BIS event 601 and a second BIS event 602). The first BIS event 601 may include six (e.g., NSE=6) sub-events, and the second BIS event 602 may include six (e.g., NSE=6) sub-events. As a non-limiting example, the first BIS event 601 and the second BIS event 602 may have an interleaved arrangement, as illustrated in FIG. 6. As a non-limiting example, the first BIS event 601 and the second BIS event 602 may have a sequential arrangement, unlike as illustrated in FIG. 6.

For example, before detection 620 of the event for the second audio service, the processor 201 may broadcast a packet 611 through each of sub-events in a BIS event (e.g., the first BIS event 601) in a BIG event (e.g., the BIG event 603) for the first audio service, and broadcast a packet 612 through each of sub-events in another BIS event (e.g., the second BIS event 602) in a BIG event (e.g., the BIG event 603). For example, the packet 611 may be broadcasted N times (e.g., N=6) from the electronic device 111 through a BIS event (e.g., the first BIS event 601) before the detection 620 of the event, and the packet 612 may be broadcasted N times (e.g., N=6) from the electronic device 111 through another BIS event (e.g., the second BIS event 602) before the detection 620 of the event.

For example, the processor 201 may execute the detection 620 of the event for the second audio service by broadcasting the packet 611 N times through a BIS event (e.g., the first BIS event 601) and the packet 612 N times through another BIS event (e.g., the second BIS event 602), while providing the first audio service.

For example, the processor 201 may allocate or schedule time resources for the second audio service, in response to (or based on) the detection 620 of the event. For example, the processor 201 may allocate or schedule a time interval 631, a time interval 632, a time interval 633, a time interval 634, and a time interval 635 as a time interval for transmitting a packet 613 for the second audio service.

For example, the processor 201 may provide the second audio service from a timing 630. For example, the processor 201 may transmit the packet 613 within the time interval 631 (or through the time interval 631) for the second audio service, transmit the packet 613 within the time interval 632 (or through the time interval 632) for the second audio service, transmit the packet 613 within the time interval 633 (or through the time interval 633) for the second audio service, transmit the packet 613 within the time interval 634 (or through the time interval 634) for the second audio service, and transmit the packet 613 within the time interval 635 (or through the time interval 635) for the second audio service.

For example, while providing the second audio service based on the detection 620 of the event, the processor 201 may broadcast a packet for the first audio service through (or within) a portion of a BIS event (or a BIG event) for the first audio service not overlapping the time resources (e.g., time interval 631, time interval 632, time interval 633, time interval 634, and time interval 635) allocated (or scheduled) for the second audio service. For example, while providing the second audio service based on the detection 620 of the event, the processor 201 may terminate, cease, refrain from, or bypass broadcasting a packet for the first audio service through another portion of a BIS event (or a BIG event) for the first audio service overlapping time resources (e.g., time interval 631, time interval 632, time interval 633, time interval 634, and time interval 635) allocated (or scheduled) for the second audio service.

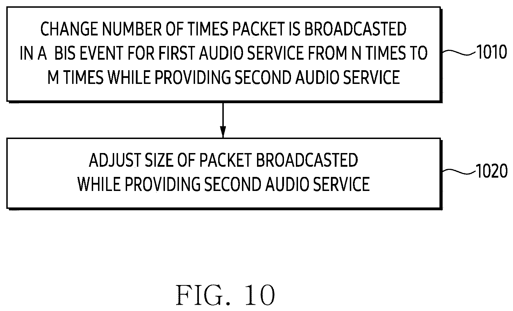

For example, while providing the second audio service from the timing 630, the processor 201 may broadcast a packet 614 through a portion of sub-events in a BIS event (e.g., a third BIS event 604) in a BIG event (e.g., a BIG event 606) for the first audio service, and broadcast a packet 615 through a portion of sub-events in another BIS event (e.g., a fourth BIS event 605) in a BIG event (e.g., the BIG event 606). For example, NSE of the third BIS event 604 may be equal to NSE of the first BIS event 601, and NSE of the fourth BIS event 605 may be equal to NSE of the second BIS event 602. For example, the packet 614 may be broadcasted M times (e.g., M=1) through a BIS event (e.g., the third BIS event 604) from the electronic device 111 while providing the second audio service, and the packet 615 may be broadcasted M times (e.g., M=1) through another BIS event (e.g., the fourth BIS event 605) from the electronic device 111 while providing the second audio service. For example, the packet 614 may correspond to the packet 611, or may be partially different from the packet 611. For example, the packet 615 may correspond to the packet 612, or may be partially different from the packet 612. The packet 614 partially different from the packet 611 will be illustrated in a description of FIG. 10.

Referring back to FIG. 5, the processor 201 may broadcast a packet M times in a BIS event while providing the second audio service. As a non-limiting example, M may be determined according to a state of a wireless environment. As a non-limiting example, when the state of the wireless environment is relatively good, M may be determined to be 3, and when the state of the wireless environment is relatively poor, M may be determined to be 1. As a non-limiting example, M may be adaptively changed according to a change in the state of the wireless environment. For example, the processor 201 may broadcast a packet M times in a BIS event while providing the second audio service, such that one or more external electronic devices (e.g., first external electronic device 101, second external electronic device 102, third external electronic device 103, and/or fourth external electronic device 104) maintain synchronizing to a BIS for the first audio service. For example, by broadcasting a packet M times in a BIS event while providing the second audio service, the processor 201 may enhance a quality of the second audio service and increase a response speed of resuming the first audio service according to termination of the second audio service.

Referring back to FIG. 4, while providing the second audio service, the processor 201 may reduce time resources consumed for advertisement executed for the first audio service, according to the changed communication method.

For example, while providing the first audio service before detecting the event, the processor 201 may perform a periodic advertisement 142 indicating the BIS for the first audio service, according to a first periodic advertising interval. For example, while providing the second audio service according to detecting the event, the processor 201 may perform the periodic advertisement 142, according to a second periodic advertising interval longer than the first periodic advertising interval. For example, the number of advertisements (e.g., one or more advertisements 141 and the periodic advertisement 142) performed by the electronic device 111 within a unit time period while providing the second audio service may be less than the number of advertisements (e.g., one or more advertisements 141 and the periodic advertisement 142) performed by the electronic device 111 within a unit time period before providing the second audio service.

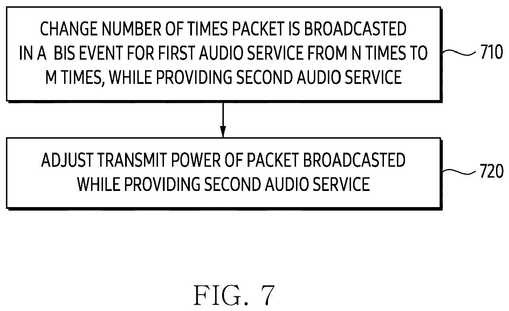

For example, while providing the second audio service, the processor 201 may adjust transmit power of a packet broadcasted for the first audio service, according to the changed communication method. For example, transmit power of a packet broadcasted for the first audio service while providing the second audio service may be higher than transmit power of a packet broadcasted for the first audio service before the start of the second audio service. This operation is illustrated in descriptions of FIGS. 7 to 9.

FIG. 7 is a flowchart illustrating a method executed in an electronic device to adjust transmit power of a packet broadcasted through a BIS event for a first audio service while providing a second audio service based on detection of an event for the second audio service.

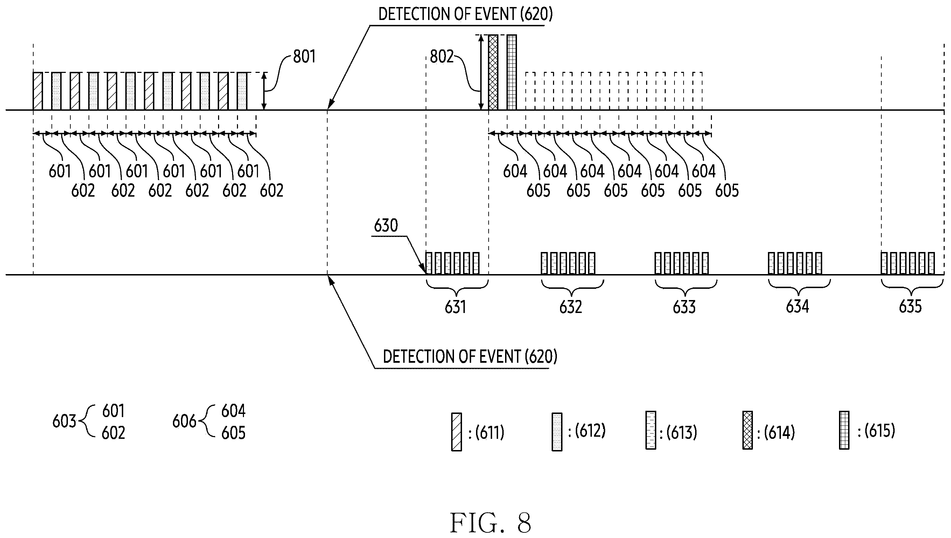

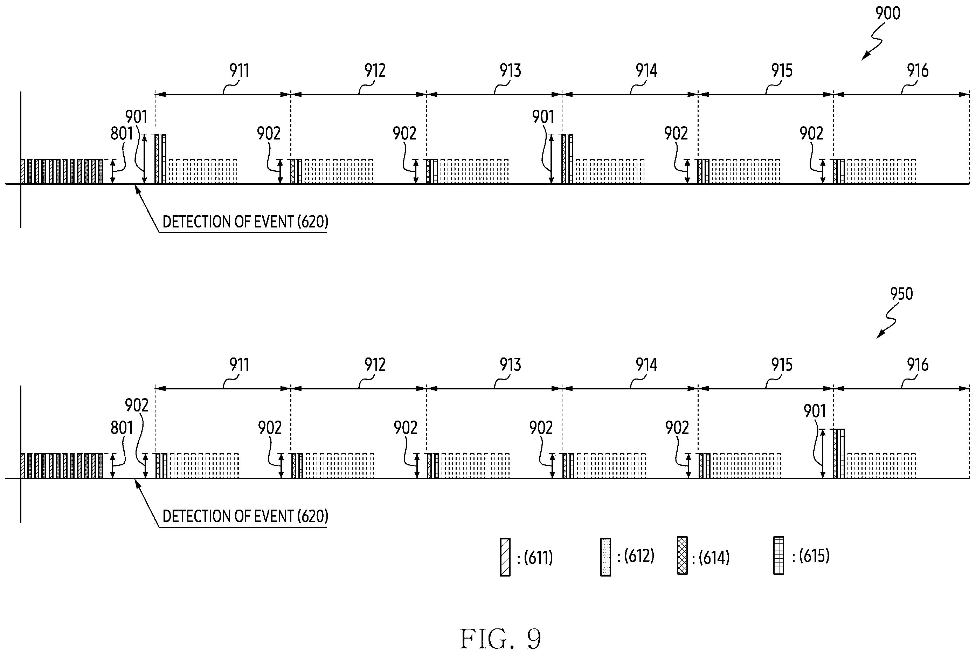

FIGS. 8 and 9 illustrate an example of adjusting transmit power of a packet broadcasted through a BIS event for a first audio service while providing a second audio service based on detection of an event for the second audio service.

Referring to FIG. 7, in operation 710, the processor 201 of the electronic device 111 may change the number of times a packet is broadcasted in a BIS event for the first audio service from N times to M times while providing the second audio service. For example, operation 710 may correspond to operation 520 of FIG. 5.

In operation 720, the processor 201 may adjust (or set) transmit power of a packet broadcasted (e.g., broadcast for the first audio service) while providing the second audio service. For example, transmit power of a packet broadcasted for the first audio service while providing the second audio service may be higher than transmit power of a packet broadcasted for the first audio service before providing the second audio service, according to the adjustment (or the setting). For example, since reducing the number of times a packet is broadcasted in a BIS event for the first audio service while providing the second audio service may cause a reduction in a reception rate, the processor 201 may perform the adjustment.

Referring to FIG. 8, the processor 201 may broadcast a packet 611 with transmit power 801 through each of sub-events in a BIS event (e.g., a first BIS event 601) in a BIG event (e.g., a BIG event 603) for the first audio service before detection 620 of the event for the second audio service, and broadcast a packet 612 with the transmit power 801 through each of sub-events in another BIS event (e.g., a second BIS event 602) in a BIG event (e.g., the BIG event 603).

For example, the processor 201 may execute the detection 620 of the event for the second audio service, while providing the first audio service by broadcasting the packet 611 N times with transmit power 801 through a BIS event (e.g., the first BIS event 601) and broadcasting the packet 612 N times with transmit power 801 through another BIS event.

For example, in response to the detection 620 of the event, the processor 201 may adjust or set transmit power of a packet broadcasted while providing the second audio service to transmit power 802 higher than the transmit power 801.

For example, transmit power 802 of a packet 614 broadcasted through a portion of sub-events in a BIS event (e.g., a third BIS event 604) in a BIG event (e.g., a BIG event 606) for the first audio service while providing the second audio service may be higher than transmit power 801 of a packet 611 broadcasted through each of sub-events in a BIS event (e.g., the first BIS event 601) in a BIG event (e.g., the BIG event 603) for the first audio service before providing the second audio service. As a non-limiting example, the transmit power 802 of the packet 611 may be the maximum transmit power of the electronic device 111.

For example, transmit power 802 of a packet 615 broadcasted through a portion of sub-events in a BIS event (e.g., a fourth BIS event 605) in a BIG event (e.g., the BIG event 606) for the first audio service while providing the second audio service may be higher than transmit power 801 of a packet 612 broadcasted through each of sub-events in a BIS event (e.g., the second BIS event 602) in a BIG event (e.g., the BIG event 603) for the first audio service before providing the second audio service. As a non-limiting example, the transmit power 802 of the packet 615 may be the maximum transmit power of the electronic device 111.

Referring back to FIG. 7, the processor 201 may adjust or set transmit power of a packet broadcasted for the first audio service in a portion of six consecutive ISO intervals to transmit power higher than transmit power of a packet broadcasted for the first audio service in another portion of six consecutive ISO intervals, such that one or more external electronic devices (e.g., first external electronic device 101, second external electronic device 102, third external electronic device 103, and/or fourth external electronic device 104) (or one or more reception devices) used to provide the first audio service maintain synchronization to a BIS for the first audio service. The descriptions describe an example in which the number of consecutive ISO intervals is 6, but it is merely exemplary. For example, the number of consecutive ISO intervals may be any natural number different from 6.

Referring to FIG. 9, for example, the processor 201 may broadcast a packet 614 through a BIS event for the first audio service in each of six ISO intervals (e.g., ISO interval 911, ISO interval 912, ISO interval 913, ISO interval 914, ISO interval 915, and ISO interval 916), while providing the second audio service. For example, the processor 201 may broadcast a packet 615 through a BIS event for the first audio service in each of six ISO intervals (e.g., ISO interval 911, ISO interval 912, ISO interval 913, ISO interval 914, ISO interval 915, and ISO interval 916), while providing the second audio service.

For example, as in state 900, in order to increase a reception rate of a packet broadcasted for the first audio service while providing the second audio service, the processor 201 may adjust or set transmit power 901 of a packet 614 broadcasted through a BIS event for the first audio service in a portion (e.g., ISO interval 911 and ISO interval 914) of six ISO intervals (e.g., ISO interval 911, ISO interval 912, ISO interval 913, ISO interval 914, ISO interval 915, and ISO interval 916) to be higher than transmit power 902 of a packet 614 broadcasted through a BIS event for the first audio service in another portion (e.g., ISO interval 912, ISO interval 913, ISO interval 915, and ISO interval 916) of six ISO intervals (e.g., ISO interval 911, ISO interval 912, ISO interval 913, ISO interval 914, ISO interval 915, and ISO interval 916). For example, the transmit power 901 of the packet 614 may correspond to the maximum transmit power of the electronic device 111. For example, the transmit power 902 of the packet 614 may be higher than the transmit power 801 of the packet 611, lower than the transmit power 801 of the packet 611, or may be the same as the transmit power 801 of the packet 611.

For example, as in state 900, in order to increase a reception rate of a packet broadcasted for the first audio service while providing the second audio service, the processor 201 may adjust or set transmit power 901 of a packet 615 broadcasted through a BIS event for the first audio service in a portion (e.g., ISO interval 911 and ISO interval 914) of six ISO intervals (e.g., ISO interval 911, ISO interval 912, ISO interval 913, ISO interval 914, ISO interval 915, and ISO interval 916) to be higher than transmit power 902 of a packet 615 broadcasted through a BIS event for the first audio service in another portion (e.g., ISO interval 912, ISO interval 913, ISO interval 915, and ISO interval 916) of six ISO intervals (e.g., ISO interval 911, ISO interval 912, ISO interval 913, ISO interval 914, ISO interval 915, and ISO interval 916). For example, the transmit power 901 of the packet 615 may correspond to the maximum transmit power of the electronic device 111. For example, the transmit power 902 of the packet 615 may be higher than the transmit power 801 of the packet 612, lower than the transmit power 801 of the packet 612, or may be the same as the transmit power 801 of the packet 612.

For example, as in state 950, in order to increase a reception rate of a packet broadcasted for the first audio service while providing the second audio service, the processor 201 may adjust or set transmit power 901 of a packet 614 broadcasted through a BIS event for the first audio service in a portion (e.g., ISO interval 916) of six ISO intervals (e.g., ISO interval 911, ISO interval 912, ISO interval 913, ISO interval 914, ISO interval 915, and ISO interval 916) to be higher than transmit power 902 of a packet 614 broadcasted through a BIS event for the first audio service in another portion (e.g., ISO interval 911 to ISO interval 915) of six ISO intervals (e.g., ISO interval 911, ISO interval 912, ISO interval 913, ISO interval 914, ISO interval 915, and ISO interval 916). For example, the transmit power 901 of the packet 614 may correspond to the maximum transmit power of the electronic device 111. For example, the transmit power 902 of the packet 614 may be higher than the transmit power 801 of the packet 611, lower than the transmit power 801 of the packet 611, or may be the same as the transmit power 801 of the packet 611.

For example, as in state 950, in order to increase a reception rate of a packet broadcasted for the first audio service while providing the second audio service, the processor 201 may adjust or set transmit power 901 of a packet 615 broadcasted through a BIS event for the first audio service in a portion (e.g., ISO interval 916) of six ISO intervals (e.g., ISO interval 911, ISO interval 912, ISO interval 913, ISO interval 914, ISO interval 915, and ISO interval 916) to be higher than transmit power 902 of a packet 615 broadcasted through a BIS event for the first audio service in another portion (e.g., ISO interval 911 to ISO interval 915) of six ISO intervals (e.g., ISO interval 911, ISO interval 912, ISO interval 913, ISO interval 914, ISO interval 915, and ISO interval 916). For example, the transmit power 901 of the packet 615 may correspond to the maximum transmit power of the electronic device 111. For example, the transmit power 902 of the packet 615 may be higher than the transmit power 801 of the packet 612, lower than the transmit power 801 of the packet 612, or may be the same as the transmit power 801 of the packet 612.

As illustrated in the description of FIGS. 7 to 9, the processor 201 may adjust transmit power of a packet broadcasted for the first audio service while providing the second audio service, such that one or more external electronic devices (e.g., first external electronic device 101, second external electronic device 102, third external electronic device 103, and/or fourth external electronic device 104) maintain synchronizing to the BIS from the electronic device 111.

Referring back to FIG. 4, the processor 201 may adjust size of a packet (or payload of the packet) broadcasted for the first audio service while providing the second audio service, according to the changed communication method. For example, size of a packet (or payload of the packet) broadcasted for the first audio service while providing the second audio service may be smaller than size of a packet (or payload of the packet) broadcasted for the first audio service before providing the second audio service. This operation is illustrated in a description of FIG. 10.

FIG. 10 is a flowchart illustrating a method executed in an electronic device to adjust size of a packet broadcasted through a BIS event for a first audio service while providing a second audio service based on detection of an event for the second audio service.

Referring to FIG. 10, in operation 1010, the processor 201 may change the number of times a packet is broadcasted in a BIS event for the first audio service from N times to M times while providing the second audio service. For example, operation 1010 may correspond to operation 520 of FIG. 5.

In operation 1020, the processor 201 of the electronic device 111 may adjust size of a packet broadcasted for the first audio service while providing the second audio service. For example, since reducing the number of times a packet is broadcasted in a BIS event for the first audio service while providing the second audio service according to operation 1010 may cause a reduction in a reception rate, the processor 201 may perform the adjustment.

For example, the processor 201 may adjust size of a packet broadcasted for the first audio service while providing the second audio service, in order to broadcast a more robust packet. For example, in order for the first audio service, while providing the second audio service, the processor 201 may broadcast a packet having size smaller than size of a packet broadcasted for the first audio service while providing the first audio service before the event. For example, since the packet is broadcasted to maintain synchronization to the BIS while providing the second audio service, the processor 201 may reduce size of the packet. As a non-limiting example, the processor 201 may broadcast an empty packet in which a length of a payload of the packet is 0, while providing the second audio service, in order for the first audio service. As a non-limiting example, size of audio data in a packet broadcasted for the first audio service while providing the second audio service based on detecting the event may be smaller than size of audio data in a packet broadcasted for the first audio service before providing the second audio service. As a non-limiting example, a packet broadcasted for the first audio service while providing the second audio service based on detecting the event may indicate or include data stored (or pre-stored) in one or more external electronic devices (e.g., first external electronic device 101, second external electronic device 102, third external electronic device 103, and/or fourth external electronic device 104) (or reception device) providing the first audio service. For example, the broadcast packet may indicate or include (comprise) data to correspond to (indicate) stored information (data) in the receiving device (e.g., reception device, such as one or more external devices), to indicate (e.g., inform, guide) at the receiving device that the first audio service (e.g., audio data of the first audio service) is being ceased. For example, the data may cause the one or more external electronic devices to output a sound to inform that the first audio service is being ceased according to reception of the packet. For example, the data of the broadcast packet may comprise or correspond to pre-stored data (information), to cause the one or more external electronic devices to output a sound (e.g., guidance) to inform that the first audio service is being ceased. For example, the data may be represented as shown in Table 1 below.

**[Table 1]**

| DATA | SOUND |
|---|---|
| a(e.g., 0x00) | Silent |
| b(e.g., 0x01) | Beep sound 1 |
| c(e.g., 0x02) | Beep sound 2 |
| d(e.g., 0x03) | Guide message 1 |
| e(e.g., 0x04) | Guide message 2 |

For example, the one or more external electronic devices may output a beep sound 1, in response to checking that data indicated by a packet broadcasted for the first audio service from the electronic device 111 while providing the second audio service is data b. For another example, the one or more external electronic devices may output a guide message 2, in response to checking that data indicated by the packet broadcasted from the electronic device 111 for the first audio service while providing the second audio service is data e.

As a non-limiting example, unlike the third external electronic device 103 and the fourth external electronic device 104 that provide the first audio service among the first audio service and the second audio service, the first external electronic device 101 and the second external electronic device 102 that provide the second audio service may refrain from, bypass, block, or skip outputting sound (e.g., a guidance indicating that the first audio service is being ceased), by using the packet broadcasted from the electronic device 111 for the first audio service while providing the second audio service. For example, the first external electronic device 101 and the second external electronic device 102 that provide the second audio service may use a packet broadcasted from the electronic device 111 while providing the second audio service to only maintain synchronization to the BIS from the electronic device 111, but may not use them to output sound.

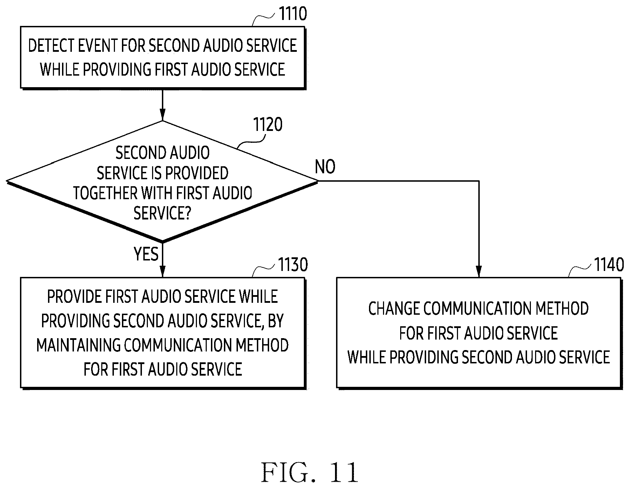

Referring back to FIG. 4, the processor 201 may determine whether the second audio service may be provided together with the first audio service before determining whether to change a communication method for the first audio service while providing the second audio service. This operation is illustrated in a description of FIG. 11.

FIG. 11 is a flowchart illustrating a method executed in an electronic device to determine whether a second audio service may be provided together with a first audio service.

Referring to FIG. 11, in operation 1110, the processor 201 of the electronic device 111 may detect the event for the second audio service while providing the first audio service. For example, operation 1110 may correspond to operation 420 of FIG. 4.

In operation 1120, the processor 201 may determine, identify, check, or analyze whether the second audio service is provided together with the first audio service based on the detection. As a non-limiting example, the processor 201 may execute operation 1120 to determine whether audio for the first audio service is capable of being outputted while outputting audio for the second audio service.

For example, the processor 201 may execute operation 1130 based on determining to provide the second audio service together with the first audio service, and may execute operation 1140 based on determining not to provide the second audio service together with the first audio service.

For example, in response to the detection, the processor 201 may check or identify a quality of a communication link (e.g., the communication link 131 and/or the communication link 133) used for the second audio service. As a non-limiting example, the processor 201 may check a quality of the communication link 131 by checking a quality of communication with the first external electronic device 101 executed through the communication link 131 before the detection. For example, the processor 201 may determine not to provide the second audio service together with the first audio service, based on the quality of the communication link 131 lower than a reference quality. For example, the processor 201 may determine to provide the second audio service together with the first audio service, based on the quality of the communication link 131 higher than or equal to the reference quality.

For example, in response to the detection, the processor 201 may check or identify a sound quality output according to the second audio service. For example, the processor 201 may determine to provide the second audio service together with the first audio service, based on the sound quality lower than a reference sound quality. For example, the processor 201 may determine not to provide the second audio service together with the first audio service, based on the sound quality higher than or equal to the reference sound quality.

For example, in response to the detection, the processor 201 may allocate resources to be used for the second audio service before resources to be used for the first audio service while providing the second audio service. For example, the processor 201 may check the amount of available resources (or remaining resources) in the electronic device 111 after allocating the resources to be used for the second audio service. For example, the processor 201 may determine to provide the second audio service together with the first audio service, based on checking that the checked amount is greater than or equal to the amount of resources required for the first audio service. For example, the processor 201 may determine not to provide the second audio service provided together with the first audio service, based on checking that the checked amount is less than the amount of resources required for the first audio service.

In operation 1130, the processor 201 may provide the first audio service while providing the second audio service, by maintaining the communication method for the first audio service, based on determining to provide the second audio service together with the first audio service.

Providing the first audio service while providing the second audio service may be executed differently according to whether an external electronic device providing the first audio service provides the second audio service. For example, the third external electronic device 103 not providing the second audio service may maintain a state of the first audio service as a state of the first audio service before providing the second audio service, by using a packet for the first audio service received from the electronic device 111 according to operation 1130 while providing the second audio service. For example, the first external electronic device 101 that provides the second audio service may ignore a packet for the first audio service received from the electronic device 111 according to operation 1130 while providing the second audio service, in order for the second audio service. This operation is illustrated in a description of FIG. 12.

FIG. 12 is a flowchart illustrating a method executed in a first external electronic device to process a packet broadcasted through a BIS event for a first audio service from an electronic device while providing a second audio service.

Referring to FIG. 12, in operation 1210, a processor 301 of a first external electronic device 101 may provide the first audio service according to receiving a packet broadcasted from the electronic device 111 according to operation 410. For example, the processor 301 may provide the first audio service by outputting audio using the packet broadcasted according to operation 410.

In operation 1220, the processor 301 may receive a packet for the first audio service and a packet for the second audio service, while the electronic device 111 provides the second audio service together with the first audio service according to operation 1130. For example, the packet for the first audio service may be received from the electronic device 111 without using a communication link 131, and the packet for the second audio service may be received from the electronic device 111 through the communication link 131.

In operation 1230, the processor 301 may ignore the packet for the first audio service. For example, ignoring the packet for the first audio service may indicate that the packet for the first audio service is not used for audio output. For example, in order to provide the second audio service according to operation 1240, the processor 301 may use the packet for the first audio service to maintain synchronization to the BIS from the electronic device 111, and may not use the packet for the first audio service to output audio. As a non-limiting example, ignoring the packet for the first audio service may be executed based on a request (or a control command) received from the electronic device 111 through the communication link 131.

In operation 1240, the processor 301 may output audio using the packet for the second audio service. For example, the processor 301 may output audio according to rendering audio data in the packet for the second audio service.

FIG. 12 illustrates that operation 1240 is executed after operation 1230 is executed, but it is merely exemplary. For example, operation 1230 may be executed while operation 1240 is executed. As another example, operation 1230 may be executed after operation 1240 is executed.

Referring back to FIG. 11, in operation 1140, the processor 201 may change a communication method for the first audio service while providing the second audio service, based on determining to provide the second audio service together with the first audio service. For example, operation 1140 of FIG. 11 may correspond to operation 440 of FIG. 4. For example, operation 1140 of FIG. 11 may include at least a portion of the operations illustrated in the description of FIGS. 5 to 10.

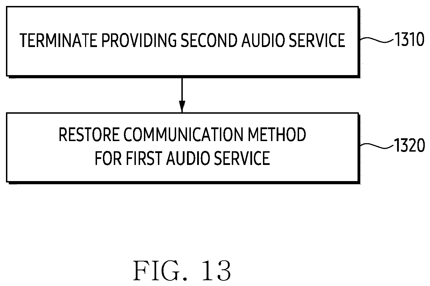

For example, the electronic device 111 may restore the communication method for the first audio service according to terminating providing the second audio service. This operation is illustrated in a description of FIG. 13.

FIG. 13 is a flowchart illustrating a method executed in an electronic device to restore a broadcasting method for a first audio service according to terminating providing a second audio service.

Referring to FIG. 13, in operation 1310, the processor 201 of the electronic device 111 may terminate providing the second audio service. As a non-limiting example, the processor 201 may terminate providing the second audio service according to termination of an incoming call. As a non-limiting example, the processor 201 may terminate providing the second audio service according to a user input indicating termination of music playback.

In operation 1320, the processor 201 may restore a communication method for the first audio service to a communication method for the first audio service performed before executing operation 420, based on terminating providing the second audio service. For example, the processor 201 may restore the communication method for the first audio service as an operation for resuming outputting audio (e.g., outputting audio obtained from a software application used for the first audio service) according to the first audio service, based on terminating providing the second audio service. For example, the processor 201 may resume broadcasting a packet N times in a BIS event for the first audio service, in response to terminating providing the second audio service.

The operations illustrated in the description of FIGS. 1 to 11 and 13 may be caused by the electronic device 1401 illustrated in the description of FIG. 14.

FIG. 14 is a block diagram illustrating an electronic device 1401 in a network environment 1400 according to various embodiments. Referring to FIG. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to an embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, an HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

## Claims

1. An electronic device (111) comprising:
memory (202), comprising one or more storage mediums, storing instructions;
communication circuitry (203) for Bluetooth low energy, BLE; and
at least one processor (201) comprising processing circuitry,
wherein the instructions, when executed by the at least one processor individually or collectively, cause the electronic device to:
while providing, using the communication circuitry (203), a first audio service by broadcasting a packet N times within a broadcast isochronous stream, BIS, event, detect an event for a second audio service, the second audio service provided by transmitting, using the communication circuitry (203), a packet to an external electronic device (101) through a communication link between the electronic device (111) and the external electronic device (101); and
broadcast, while providing the second audio service using the communication circuitry (203) based on the detection, a packet for the first audio service M times within a BIS event using the communication circuitry (203),
where N is a natural number greater than 1, and M is a natural number that is greater than or equal to 1 and is less than N.

2. The electronic device (111) of claim 1, wherein the instructions, when executed by the at least one processor (201) individually or collectively, cause the electronic device (111) to:
broadcast, while providing the second audio service, a packet M times within a BIS event such that one or more external electronic devices maintain synchronizing to a BIS for the first audio service.

3. The electronic device (111) of claim 1 or claim 2, wherein the instructions, when executed by the at least one processor (201) individually or collectively, cause the electronic device (111) to:
resume, in response to terminating to provide the second audio service, broadcasting a packet N times within a BIS event for the first audio service.

4. The electronic device (111) of any preceding claim, wherein the instructions, when executed by the at least one processor (201) individually or collectively, cause the electronic device (111) to:
perform, according to a first periodic advertising interval, a periodic advertisement indicating a BIS for the first audio service using the communication circuitry (203), while providing the first audio service before the detected event; and
perform, according to a second periodic advertising interval longer than the first periodic advertising interval, the periodic advertisement, while providing the second audio service after the detected event.

5. The electronic device (111) of any preceding claim, wherein a size of audio data in a packet broadcast N times from the electronic device (111) while providing the first audio service before the detected event is larger than a size of audio data in a packet broadcast M times from the electronic device (111) while providing the second audio service after the detected event.

6. The electronic device (111) of any preceding claim, wherein a packet broadcast M times from the electronic device (111) while providing the second audio service after the detected event indicates data that is pre-stored in a reception device to inform that the first audio service is being ceased, instead of audio data.

7. The electronic device (111) of any preceding claim, wherein a transmit, Tx, power of a packet broadcast N times from the electronic device while providing the first audio service before the detected event is lower than Tx power of a packet broadcast M times from the electronic device while providing the second audio service after the detected event.

8. The electronic device (111) of claim 1, wherein the instructions, when executed by the at least one processor (201) individually or collectively, cause the electronic device (111) to:
check a quality of the communication link in response to the detected event; and
determine, based on the quality of the communication link, whether to broadcast a packet N times within a BIS event while providing the second audio service or to broadcast a packet M times within a BIS event while providing the second audio service.

9. The electronic device (111) of claim 8, wherein the instructions, when executed by the at least one processor (201) individually or collectively, cause the electronic device (111) to:
determine, based on the quality lower than a reference quality, to broadcast a packet M times within a BIS event while providing the second audio service; and
determine, based on the quality higher than the reference quality, to broadcast a packet N times within a BIS event while providing the second audio service.

10. The electronic device (111) of claim 8, wherein the instructions, when executed by the at least one processor (201) individually or collectively, cause the electronic device (111) to:
check a sound quality output according to the second audio service, in response to the detected event; and
determine, based on the sound quality, whether to broadcast a packet N times within a BIS event while providing the second audio service or to broadcast a packet M times within a BIS event while providing the second audio service.

11. The electronic device (111) of any preceding claim, wherein the communication link comprises synchronous connection oriented, SCO, link, enhanced SCO, eSCO, link, a link for a connection isochronous stream, CIS, and/or a link for an advanced audio distribution profile, A2DP.

12. A method executed in an electronic device (111) with communication circuitry (203) for Bluetooth low energy, BLE, the method comprising:
while providing (410), using the communication circuitry (203), a first audio service by broadcasting a packet N times within a broadcast isochronous stream, BIS, event using the communication circuitry, detecting (420) an event for a second audio service, the second audio service provided by transmitting, using the communication circuitry (203), a packet to an external electronic device (101) through a communication link between the electronic device (111) and an external electronic device (101); and
broadcasting, while providing (430) the second audio service using the communication circuitry (203) based on the detection, a packet for the first audio service M times within a BIS event using the communication circuitry (203),
where N is a natural number greater than 1, and M is a natural number that is greater than or equal to 1 and is less than N.

13. The method of claim 12, wherein broadcasting a packet M times within a BIS event using the communication circuitry (203) comprises:
broadcasting, while providing (430) the second audio service, a packet M times within a BIS event such that one or more external electronic devices maintain synchronizing to a BIS for the first audio service.

14. The method of claim 12 or 13, further comprising:
resuming, in response to terminating to provide the second audio service, broadcasting a packet N times within a BIS event for the first audio service.

15. A computer readable storage medium having stored therein one or more programs, the one or more programs comprising instructions which, when executed by an electronic device (111) with communication circuitry (203) for Bluetooth low energy, BLE, cause the electronic device (111) to:
while providing (410) a first audio service by broadcasting a packet N times within a broadcast isochronous stream, BIS, event using the communication circuitry (203), detect (420) an event for a second audio service provided by transmitting a packet through a communication link between the electronic device (111) and an external electronic device (101) to the external electronic device (101) using the communication circuitry (203); and
while providing the second audio service using the communication circuitry (203) based on the detection, broadcast a packet M times within a BIS event using the communication circuitry (203),
where N is a natural number greater than 1, and M is a natural number that is greater t han or equal to 1 and is less than N.

## Patentansprüche

1. Elektronische Vorrichtung (111), umfassend:
Speicher (202), der ein oder mehrere Speichermedien umfasst, der Anweisungen speichert;
Kommunikationsschaltungen (203) für Bluetooth-Low-Energy, BLE; und
mindestens einen Prozessor (201), der Verarbeitungsschaltungen umfasst,
wobei die Anweisungen, wenn sie durch den zumindest einen Prozessor einzeln oder gemeinsam ausgeführt werden, die elektronische Vorrichtung zu Folgendem veranlassen:
während unter Verwendung der Kommunikationsschaltungen (203) ein erster Audiodienst bereitgestellt wird, indem ein Paket N-mal innerhalb eines isochronen Broadcast-Stream-, BIS, - Ereignisses ausgestrahlt wird, Erkennen eines Ereignisses für einen zweiten Audiodienst, wobei der zweite Audiodienst bereitgestellt wird, indem unter Verwendung der Kommunikationsschaltungen (203) ein Paket an eine externe elektronische Vorrichtung (101) durch eine Kommunikationsverknüpfung zwischen der elektronischen Vorrichtung (111) und der externen elektronischen Vorrichtung (101) übertragen wird; und
Ausstrahlen während der zweite Audiodienst unter Verwendung der Kommunikationsschaltungen (203) basierend auf der Erkennung bereitgestellt wird, eines Pakets für den ersten Audiodienst M-mal innerhalb eines BIS-Ereignisses unter Verwendung der Kommunikationsschaltungen (203),
wobei N eine natürliche Zahl größer als 1 ist und M eine natürliche Zahl ist, die größer als oder gleich 1 ist und kleiner als N ist.

2. Elektronische Vorrichtung (111) nach Anspruch 1, wobei die Anweisungen, wenn sie durch den mindestens einen Prozessor (201) einzeln oder gemeinsam ausgeführt werden, die elektronische Vorrichtung (111) zu Folgendem veranlassen:
Ausstrahlen während des Bereitstellens des zweiten Audiodienstes eines Pakets M-mal innerhalb eines BIS-Ereignisses, derart, dass eine oder mehrere externe elektronische Vorrichtungen die Synchronisierung mit einem BIS für den ersten Audiodienst aufrechterhalten.

3. Elektronische Vorrichtung (111) nach Anspruch 1 oder Anspruch 2, wobei die Anweisungen, wenn sie durch den mindestens einen Prozessor (201) einzeln oder gemeinsam ausgeführt werden, die elektronische Vorrichtung (111) zu Folgendem veranlassen:
Fortsetzen, als Reaktion auf das Beenden des Bereitstellens des zweiten Audiodienstes, des Ausstrahlens eines Pakets N-mal innerhalb eines BIS-Ereignisses für den ersten Audiodienst.

4. Elektronische Vorrichtung (111) nach einem vorhergehenden Anspruch, wobei die Anweisungen, wenn sie durch den mindestens einen Prozessor (201) einzeln oder gemeinsam ausgeführt werden, die elektronische Vorrichtung (111) zu Folgendem veranlassen:
Durchführen, gemäß einem ersten periodischen Werbeintervall, einer periodischen Werbung, die ein BIS für den ersten Audiodienst angibt, unter Verwendung der Kommunikationsschaltungen (203), während der erste Audiodienst vor dem erkannten Ereignis bereitgestellt wird; und
Durchführen, gemäß einem zweiten periodischen Werbeintervall, das länger als das erste periodische Werbeintervall ist, der periodischen Werbung, während des zweiten Audiodienstes nach dem erkannten Ereignis bereitgestellt wird.

5. Elektronische Vorrichtung (111) nach einem vorhergehenden Anspruch, wobei eine Größe von Audiodaten in einem Paket, das N-mal von der elektronischen Vorrichtung (111) ausgestrahlt wird, während der erste Audiodienst vor dem erkannten Ereignis bereitgestellt wird, größer ist als eine Größe von Audiodaten in einem Paket, das M-mal von der elektronischen Vorrichtung (111) ausgestrahlt wird, während der zweite Audiodienst nach dem erkannten Ereignis bereitgestellt wird.

6. Elektronische Vorrichtung (111) nach einem vorhergehenden Anspruch, wobei ein Paket, das M-mal von der elektronischen Vorrichtung (111) ausgestrahlt wird, während des zweiten Audiodienstes nach dem erkannten Ereignis bereitgestellt wird, Daten anzeigt, die in einer Empfangsvorrichtung vorgespeichert sind, um zu informieren, dass der erste Audiodienst beendet wird, anstelle von Audiodaten.

7. Elektronische Vorrichtung (111) nach einem vorhergehenden Anspruch, wobei eine Übertragungsleistung, Tx, eines Pakets, das N-mal von der elektronischen Vorrichtung ausgestrahlt wird, während der erste Audiodienst vor dem erkannten Ereignis bereitgestellt wird, niedriger ist als eine Tx-Leistung eines Pakets, das M-mal von der elektronischen Vorrichtung ausgestrahlt wird, während der zweite Audiodienst nach dem erkannten Ereignis bereitgestellt wird.

8. Elektronische Vorrichtung (111) nach Anspruch 1, wobei die Anweisungen, wenn sie durch den mindestens einen Prozessor (201) einzeln oder gemeinsam ausgeführt werden, die elektronische Vorrichtung (111) zu Folgendem veranlassen:
Überprüfen einer Qualität der Kommunikationsverknüpfung als Reaktion auf das erkannte Ereignis; und
Bestimmen basierend auf der Qualität der Kommunikationsverknüpfung, ob ein Paket N-mal innerhalb eines BIS-Ereignisses ausgestrahlt werden soll, während der zweite Audiodienst bereitgestellt wird, oder ob ein Paket M-mal innerhalb eines BIS-Ereignisses ausgestrahlt werden soll, während der zweite Audiodienst bereitgestellt wird.

9. Elektronische Vorrichtung (111) nach Anspruch 8, wobei die Anweisungen, wenn sie durch den mindestens einen Prozessor (201) einzeln oder gemeinsam ausgeführt werden, die elektronische Vorrichtung (111) zu Folgendem veranlassen:
Bestimmen basierend auf der Qualität, die niedriger als eine Referenzqualität ist, ein Paket M-mal innerhalb eines BIS-Ereignisses auszustrahlen, während der zweite Audiodienst bereitgestellt wird; und
Bestimmen basierend auf der Qualität, die höher als die Referenzqualität ist, ein Paket N-mal innerhalb eines BIS-Ereignisses auszustrahlen, während der zweite Audiodienst bereitgestellt wird.

10. Elektronische Vorrichtung (111) nach Anspruch 8, wobei die Anweisungen, wenn sie durch den mindestens einen Prozessor (201) einzeln oder gemeinsam ausgeführt werden, die elektronische Vorrichtung (111) zu Folgendem veranlassen:
Überprüfen einer Tonqualitätsausgabe gemäß dem zweiten Audiodienst als Reaktion auf das erkannte Ereignis; und
Bestimmen basierend auf der Tonqualität der Kommunikationsverbindung, ob ein Paket N-mal innerhalb eines BIS-Ereignisses ausgestrahlt werden soll, während der zweite Audiodienst bereitgestellt wird, oder ein Paket M-mal innerhalb eines BIS-Ereignisses ausgestrahlt werden soll, während der zweite Audiodienst bereitgestellt wird.

11. Elektronische Vorrichtung (111) nach einem vorhergehenden Anspruch, wobei die Kommunikationsverknüpfung eine synchrone verbindungsorientierte, SCO-, Verknüpfung, erweiterte SCO-, eSCO-, Verbindung, eine Verknüpfung für einen isochronen Verbindungsstrom, CIS und/oder eine Verknüpfung für ein erweitertes Audioverteilungsprofil, A2DP, umfasst.

12. Verfahren, das in einer elektronische Vorrichtung (111) mit Kommunikationsschaltungen (203) für Bluetooth-Low-Energy, BLE, ausgeführt wird, wobei das Verfahren Folgendes umfasst:
während unter Verwendung der Kommunikationsschaltungen (203) ein erster Audiodienst bereitgestellt (410) wird, indem ein Paket N-mal innerhalb eines isochronen Broadcast-Stream-, BIS, -Ereignisses unter Verwendung der Kommunikationsschaltungen ausgestrahlt wird, Erkennen (420) eines Ereignisses für einen zweiten Audiodienst, wobei der zweite Audiodienst bereitgestellt wird, indem unter Verwendung der Kommunikationsschaltungen (203) ein Paket an eine externe elektronische Vorrichtung (101) durch eine Kommunikationsverknüpfung zwischen der elektronischen Vorrichtung (111) und einer externen elektronischen Vorrichtung (101) übertragen wird; und
Ausstrahlen, während der zweite Audiodienst unter Verwendung der Kommunikationsschaltungen (203) basierend auf der Erkennung bereitgestellt (430) wird, eines Pakets für den ersten Audiodienst M-mal innerhalb eines BIS-Ereignisses unter Verwendung der Kommunikationsschaltungen (203),
wobei N eine natürliche Zahl größer als 1 ist und M eine natürliche Zahl ist, die größer als oder gleich 1 ist und kleiner als N ist.

13. Verfahren nach Anspruch 12, wobei das Ausstrahlen eines Pakets M-mal innerhalb eines BIS-Ereignisses unter Verwendung der Kommunikationsschaltungen (203) Folgendes umfasst:
Ausstrahlen, während der zweite Audiodienst bereitgestellt (430) wird, eines Pakets M-mal innerhalb eines BIS-Ereignisses, derart, dass eine oder mehrere externe elektronische Vorrichtungen die Synchronisierung mit einem BIS für den ersten Audiodienst aufrechterhalten.

14. Verfahren nach Anspruch 12 oder 13, ferner umfassend:
Fortsetzen, als Reaktion auf das Beenden des Bereitstellens des zweiten Audiodienstes, des Ausstrahlens eines Pakets N-mal innerhalb eines BIS-Ereignisses für den ersten Audiodienst.

15. Computerlesbares Speichermedium, auf dem ein oder mehrere Programme gespeichert sind, wobei das eine oder die mehreren Programme Anweisungen umfassen, die, wenn sie durch eine elektronische Vorrichtung (111) mit Kommunikationsschaltungen (203) für Bluetooth-Low-Energy, BLE, ausgeführt werden, die elektronische Vorrichtung (111) zu Folgendem veranlassen:
während ein erster Audiodienst bereitgestellt (410) wird, indem ein Paket N-mal innerhalb eines isochronen Broadcast-Stream-, BIS, -Ereignisses unter Verwendung der Kommunikationsschaltungen (203) ausgestrahlt wird, Erkennen (420) eines Ereignisses für einen zweiten Audiodienst, der bereitgestellt wird, indem ein Paket durch eine Kommunikationsverknüpfung zwischen der elektronischen Vorrichtung (111) und einer externen elektronischen Vorrichtung (101) an die externe elektronische Vorrichtung (101) unter Verwendung der Kommunikationsschaltungen (203) übertragen wird; und
während der zweite Audiodienst unter Verwendung der Kommunikationsschaltungen (203) basierend auf der Erkennung bereitgestellt wird, Ausstrahlen eines Pakets M-mal innerhalb eines BIS-Ereignisses unter Verwendung der Kommunikationsschaltungen (203),
wobei N eine natürliche Zahl größer als 1 ist und M eine natürliche Zahl ist, die größer als oder gleich 1 ist und kleiner als N ist.

## Revendications

1. Dispositif électronique (111) comprenant :
de la mémoire (202), comprenant un ou plusieurs supports de stockage, stockant des instructions ;
un circuit de communication (203) pour Bluetooth basse énergie, BLE ; et
au moins un processeur (201) comprenant des circuits de traitement,
dans lequel les instructions, lorsqu'elles sont exécutées individuellement ou collectivement par l'au moins un processeur, amènent le dispositif électronique à :
tout en fournissant, à l'aide du circuit de communication (203), un premier service audio en diffusant un paquet N fois au sein d'un événement de flux isochrone de diffusion, BIS, détecter un événement pour un second service audio, le second service audio étant fourni en transmettant, à l'aide du circuit de communication (203), un paquet à un dispositif électronique externe (101) au travers d'une liaison de communication entre le dispositif électronique (111) et le dispositif électronique externe (101) ; et
diffuser, tout en fournissant le second service audio à l'aide du circuit de communication (203) sur la base de la détection, un paquet pour le premier service audio M fois au sein d'un événement BIS à l'aide du circuit de communication (203),
où N est un nombre naturel supérieur à 1, et M est un nombre naturel qui est supérieur ou égal à 1 et est inférieur à N.

2. Dispositif électronique (111) de la revendication 1, dans lequel les instructions, lorsqu'elles sont exécutées individuellement ou collectivement par l'au moins un processeur (201), amènent le dispositif électronique (111) à :
diffuser, tout en fournissant le second service audio, un paquet M fois au sein d'un événement BIS de sorte qu'un ou plusieurs dispositifs électroniques externes maintiennent une synchronisation à un BIS pour le premier service audio.

3. Dispositif électronique (111) de la revendication 1 ou de la revendication 2, dans lequel les instructions, lorsqu'elles sont exécutées individuellement ou collectivement par l'au moins un processeur (201), amènent le dispositif électronique (111) à :
reprendre, en réponse à la fin de la fourniture du second service audio, la diffusion d'un paquet N fois au sein d'un événement BIS pour le premier service audio.

4. Dispositif électronique (111) d'une quelconque revendication précédente, dans lequel les instructions, lorsqu'elles sont exécutées individuellement ou collectivement par l'au moins un processeur (201), amènent le dispositif électronique (111) à :
réaliser, selon un premier intervalle de publicité périodique, une publicité périodique indiquant un BIS pour le premier service audio à l'aide du circuit de communication (203), tout en fournissant le premier service audio avant l'événement détecté ; et
réaliser, selon un second intervalle de publicité périodique plus long que le premier intervalle de publicité périodique, la publicité périodique, tout en fournissant le second service audio après l'événement détecté.

5. Dispositif électronique (111) d'une quelconque revendication précédente, dans lequel une taille de données audio dans un paquet diffusé N fois à partir du dispositif électronique (111) tout en fournissant le premier service audio avant l'événement détecté est supérieure à une taille de données audio dans un paquet diffusé M fois à partir du dispositif électronique (111) tout en fournissant le second service audio après l'événement détecté.

6. Dispositif électronique (111) d'une quelconque revendication précédente, dans lequel une diffusion de paquet M fois à partir du dispositif électronique (111) tout en fournissant le second service audio après l'événement détecté indique des données qui sont pré-mémorisées dans un dispositif de réception pour informer que le premier service audio est en train d'être interrompu, au lieu de données audio.

7. Dispositif électronique (111) d'une quelconque revendication précédente, dans lequel une puissance de transmission, Tx, d'un paquet diffusé N fois à partir du dispositif électronique tout en fournissant le premier service audio avant l'événement détecté est inférieure à une puissance Tx d'un paquet diffusé M fois à partir du dispositif électronique tout en fournissant le second service audio après l'événement détecté.

8. Dispositif électronique (111) de la revendication 1, dans lequel les instructions, lorsqu'elles sont exécutées individuellement ou collectivement par l'au moins un processeur (201), amènent le dispositif électronique (111) à :
vérifier une qualité de la liaison de communication en réponse à l'événement détecté ; et
déterminer, sur la base de la qualité de la liaison de communication, s'il faut diffuser un paquet N fois au sein d'un événement BIS tout en fournissant le second service audio ou diffuser un paquet M fois au sein d'un événement BIS tout en fournissant le second service audio.

9. Dispositif électronique (111) de la revendication 8, dans lequel les instructions, lorsqu'elles sont exécutées individuellement ou collectivement par l'au moins un processeur (201), amènent le dispositif électronique (111) à :
déterminer, sur la base de la qualité inférieure à une qualité de référence, de diffuser un paquet M fois au sein d'un événement BIS tout en fournissant le second service audio ; et
déterminer, sur la base de la qualité supérieure à la qualité de référence, de diffuser un paquet N fois au sein d'un événement BIS tout en fournissant le second service audio.

10. Dispositif électronique (111) de la revendication 8, dans lequel les instructions, lorsqu'elles sont exécutées individuellement ou collectivement par l'au moins un processeur (201), amènent le dispositif électronique (111) à :
vérifier une sortie de qualité sonore selon le second service audio, en réponse à l'événement détecté ; et
déterminer, sur la base de la qualité sonore, s'il faut diffuser un paquet N fois au sein d'un événement BIS tout en fournissant le second service audio ou diffuser un paquet M fois au sein d'un événement BIS tout en fournissant le second service audio.

11. Dispositif électronique (111) d'une quelconque revendication précédente, dans lequel la liaison de communication comprend une liaison orientée connexion synchrone, SCO, une liaison SCO améliorée, eSCO, une liaison pour un flux isochrone de connexion, CIS, et/ou une liaison pour un profil de distribution audio avancé, A2DP.

12. Procédé exécuté dans un dispositif électronique (111) avec un circuit de communication (203) pour Bluetooth basse énergie, BLE, le procédé comprenant :
tout en fournissant (410), à l'aide du circuit de communication (203), un premier service audio en diffusant un paquet N fois au sein d'un événement de flux isochrone de diffusion, BIS, à l'aide du circuit de communication, la détection (420) d'un événement pour un second service audio, le second service audio étant fourni en transmettant, à l'aide du circuit de communication (203), un paquet à un dispositif électronique externe (101) au travers d'une liaison de communication entre le dispositif électronique (111) et un dispositif électronique externe (101) ; et
la diffusion, tout en fournissant (430) le second service audio à l'aide du circuit de communication (203) sur la base de la détection, d'un paquet pour le premier service audio M fois au sein d'un événement BIS à l'aide du circuit de communication (203),
où N est un nombre naturel supérieur à 1, et M est un nombre naturel qui est supérieur ou égal à 1 et est inférieur à N.

13. Procédé de la revendication 12, dans lequel la diffusion d'un paquet M fois au sein d'un événement BIS à l'aide du circuit de communication (203) comprenant :
la diffusion, tout en fournissant (430) le second service audio, d'un paquet M fois au sein d'un événement BIS de sorte qu'un ou plusieurs dispositifs électroniques externes maintiennent une synchronisation à un BIS pour le premier service audio.

14. Procédé de la revendication 12 ou 13, comprenant en outre :
la reprise, en réponse à la fin de la fourniture du second service audio, de la diffusion d'un paquet N fois au sein d'un événement BIS pour le premier service audio.

15. Support de stockage lisible par ordinateur dans lequel sont stockés un ou plusieurs programmes, les un ou plusieurs programmes comprenant des instructions qui, lorsqu'elles sont exécutées par un dispositif électronique (111) avec un circuit de communication (203) pour Bluetooth basse énergie, BLE, amènent le dispositif électronique (111) à :
tout en fournissant (410) un premier service audio en diffusant un paquet N fois au sein d'un événement de flux isochrone de diffusion, BIS, à l'aide du circuit de communication (203), détecter (420) un événement pour un second service audio fourni en transmettant un paquet au travers d'une liaison de communication entre le dispositif électronique (111) et un dispositif électronique externe (101) au dispositif électronique externe (101) à l'aide du circuit de communication (203) ; et
tout en fournissant le second service audio à l'aide du circuit de communication (203) sur la base de la détection, diffuser un paquet M fois au sein d'un événement BIS à l'aide du circuit de communication (203),
où N est un nombre naturel supérieur à 1, et M est un nombre naturel qui est supérieur ou égal à 1 et est inférieur à N.
